# FASCICULE DE BREVET EUROPEEN

(11) **EP 2 067 667 B1**
(45) Date de publication et mention de la délivrance du brevet: **28.04.2010**
(21) Numéro de dépôt: 08170629.3
(22) Date de dépôt: 03.12.2008
(51) Int. Cl.: B60R 13/08

(54) **Dispositif d''atténuation des bruits se propageant entre une aile avant et une structure porteuse de carrosserie d'un vehicule**
Dämpfungsvorrichtung für Geräusche, die sich zwischen einem Kotflügel und einer Tragwerkstruktur der Karosserie eines Fahrzeugs ausbreiten
Device for reducing the noise propagating between a front wing and a bearing structure of a vehicle body

(30) Priorité: 07.12.2007 FR 0759661
(43) Date de publication de la demande: 10.06.2009
(73) Titulaire: PEUGEOT CITROËN AUTOMOBILES S.A., 78140 Vélizy Villacoublay (FR)
(72) Inventeur: Raulic, Julian, 78130, Les Mureaux (FR); Mathou, Laurent, 94220, Charenton Le Pont (FR)
(74) Mandataire: Fernandez, Francis Lionel

(56) Documents cités:
- JP-A- 2004 026 060
- JP-A- 2006 168 464
- JP-A- 2006 219 013
- US-A1- 2005 230 165

## Description

La présente invention concerne un dispositif d'atténuation des bruits se propageant entre une aile de véhicule, telle qu'une aile avant, et une structure porteuse de carrosserie du véhicule, lorsque ce dernier se déplace ou est à l'arrêt.

Un tel dispositif est connu par la demande de brevet US 2005/0230165 et comprend au moins une cloison transversale disposée entre la partie arrière de l'aile avant et le pied avant de la structure porteuse de carrosserie du véhicule.

La cloison transversale est pourvue sur l'une de ses faces d'une couche en un matériau thermiquement expansible, tel qu'un matériau mousse, de façon à obturer la cavité dans laquelle se trouve la cloison pour constituer une barrière d'insonorisation.

Cependant, l'utilisation d'un matériau thermiquement expansible d'insonorisation est délicate à mettre en oeuvre et a pour inconvénient supplémentaire de ne pas présenter une bonne tenue dans le temps.

La présente invention a pour but de pallier les inconvénients ci-dessus des moyens d'insonorisation connus utilisés dans des ailes notamment avant de véhicules.

A cet effet, l'invention propose un dispositif permettant d'atténuer les bruits se propageant entre une aile de véhicule, telle qu'une aile avant, et une structure porteuse de carrosserie du véhicule, lorsque ce dernier se déplace ou est à l'arrêt, comprenant au moins une cloison d'insonorisation disposée entre une paroi latérale externe de l'aile et la structure porteuse de carrosserie, et qui est **caractérisé en ce que** la cloison d'insonorisation est pourvue sur l'une de ses faces d'une coque d'insonorisation solidaire de la cloison d'insonorisation en recouvrant cette dernière de façon à définir un espace interne fermé et étanche.

Dans le cas où l'aile est une aile avant, l'ensemble à cloison et coque d'insonorisation est disposé transversalement au véhicule à l'extrémité arrière de la paroi latérale de l'aile avant pour obturer l'espace entre cette extrémité et le pied avant de la structure porteuse de carrosserie au niveau de l'entrée de porte du véhicule.

De préférence, l'espace interne entre coque et cloison d'insonorisation est rempli d'air.

Avantageusement, la coque d'insonorisation est fixée à la cloison d'insonorisation par collage.

La paroi de la coque d'insonorisation recouvre complètement la cloison d'insonorisation et s'étend de façon sensiblement parallèle à cette cloison.

La cloison d'insonorisation comporte un joint souple périphérique externe en matériau élastomère ou en matériau mousse et en appui étanche sur les faces internes correspondantes de la paroi latérale de l'aile et de la structure porteuse de carrosserie.

La coque d'insonorisation est disposée en avant du véhicule.

L'invention vise également une cloison d'insonorisation destinée à obturer l'espace entre une aile latérale avant d'un véhicule et une structure porteuse de carrosserie sur laquelle l'aile doit être fixée, et qui est **caractérisée en ce qu**'elle est pourvue sur l'une de ses faces d'une coque d'insonorisation solidaire de la cloison d'insonorisation en recouvrant cette dernière de façon à définir un espace interne fermé et étanche relativement à l'extérieur.

L'espace interne entre coque et cloison d'insonorisation est rempli d'air.

La coque d'insonorisation est fixée à la cloison d'insonorisation par collage.

La paroi de la coque d'insonorisation recouvre complètement la cloison d'insonorisation et s'étend de façon sensiblement parallèle à la cloison d'insonorisation.

La cloison d'insonorisation comporte un joint souple périphérique externe en matériau élastomère ou en matériau mousse.

L'invention vise enfin un véhicule comprenant deux ailes avant et **caractérisé en ce qu**'il comprend un dispositif tel que défini précédemment pour atténuer les bruits se propageant entre chaque aile avant du véhicule et une structure porteuse de carrosserie du véhicule.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :

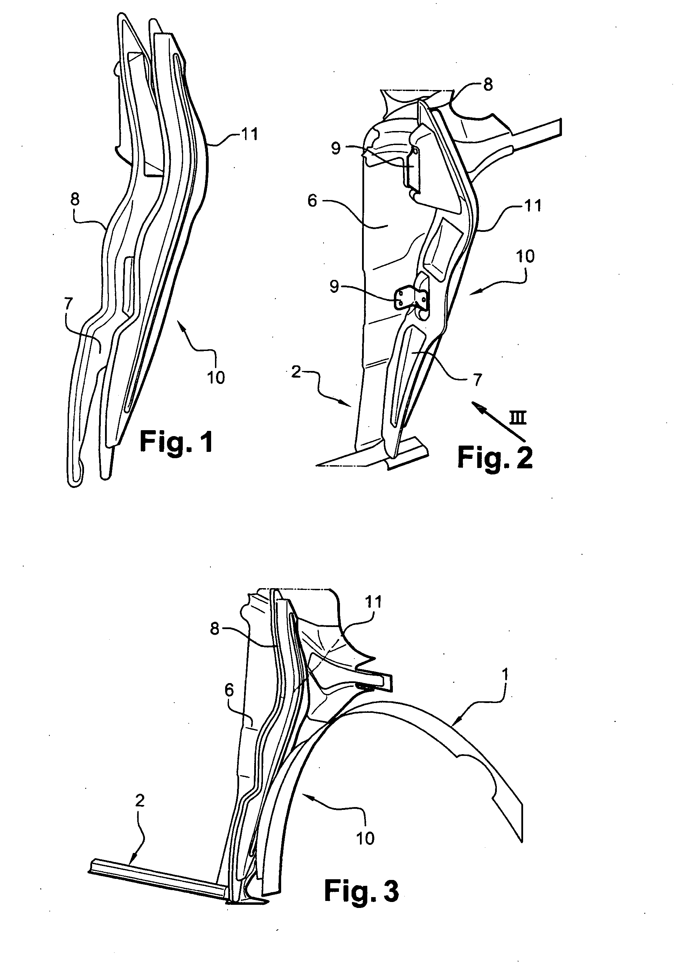

- la figure 1 est une vue en perspective éclatée des moyens d'insonorisation de l'invention s'appliquant à une aile avant d'un véhicule automobile ;
- la figure 2 est une vue en perspective partielle d'une partie de carrosserie de véhicule à laquelle sont fixés les moyens d'insonorisation de la figure 1 ;
- la figure 3 est une vue en perspective suivant la flèche III de la figure 2 ;

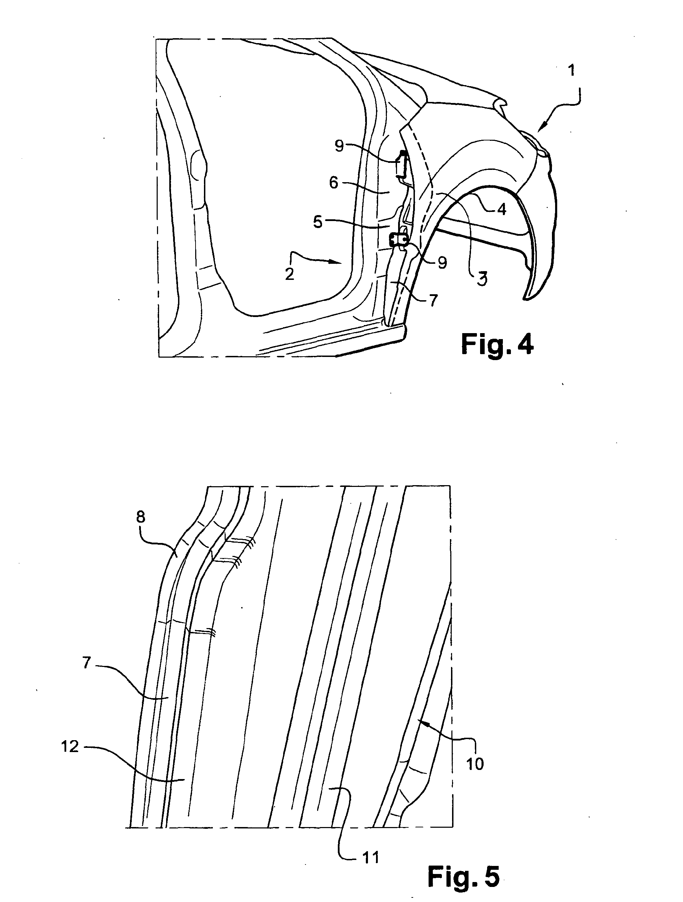

- la figure 4 est une vue en perspective d'une aile latérale avant fixée à une partie de carrosserie de véhicule et entre lesquelles sont montés les moyens d'insonorisation de l'invention ; et
- la figure 5 est une vue agrandie de la partie cerclée en V de la figure 3.

En se reportant aux figures, la référence 1 désigne une aile latérale avant droite d'un véhicule pouvant être réalisée en une matière thermoplastique ou en tôle et fixée par tout moyen approprié, non représenté, à une structure porteuse de carrosserie 2 du véhicule, et comprenant notamment le pied avant 6 délimitant en partie l'encadrement de l'ouverture d'entrée dans l'habitacle du véhicule.

L'aile avant droite 1 comprend une paroi latérale externe 3 s'étendant sensiblement en direction longitudinale de véhicule et présentant essentiellement un bord inférieur 4 au profil circulaire conjugué de celui de la roue avant droite du véhicule et une partie arrière 5 disposée en regard du pied avant droit 6 de la carrosserie 2.

Dans l'espace défini entre la partie arrière 5 de la paroi 3 de l'aile avant 1 et le pied avant 6 de la carrosserie 2 sont montés les moyens d'insonorisation de l'invention permettant d'amortir les bruits qui se propagent, à l'arrêt ou lors du roulage du véhicule, entre l'aile 1 et le pied 6 de carrosserie 2.

Ces bruits sont ceux émis par d'une part le groupe moto-propulseur implanté sous le capot avant du véhicule et d'autre part les turbulences aérodynamiques autour du passage de roue et les chuintements du pneumatique de la roue avant droite sur différents types de revêtement de la route.

Les moyens d'insonorisation comprennent une cloison 7 appelée communément "bâtant d'aile" obturant de façon étanche l'espace entre la partie arrière 5 de la paroi 3 de l'aile 1 et le pied 6 de la carrosserie 2 en étant disposée entre la paroi 3 et le pied 6 sensiblement perpendiculairement à la paroi 3 et au pied 6. Ainsi, la cloison 7 est disposée transversalement à la direction longitudinale du véhicule à l'extrémité arrière de la partie 5 de la paroi latérale 3 de l'aile 1 pour obturer l'espace entre cette extrémité et le pied 6 au niveau de l'entrée de porte. La cloison 7 est pourvue sur sa périphérie externe d'un joint souple à lèvre 8 comprimé par les faces internes de la partie arrière 5 de l'aile 1 et du pied avant 6 et entourant complètement la cloison 7 de façon à assurer une partie de l'isolation acoustique. Le joint 8 peut être réalisé en un matériau élastomère ou en un matériau mousse.

La cloison 7 comporte des pattes 9 assurant sa fixation, par exemple par vissage, au pied 6 de la partie de carrosserie 2. En outre, la cloison 7 peut être fixée, avant son montage à la partie de carrosserie 2, à la paroi 3 de l'aile 1 par tout moyen approprié. A sa position assemblée entre le pied 6 et la paroi 3 de l'aile 1, la cloison 7 s'étend sensiblement verticalement le long de la partie arrière 5 de la paroi 3 et du pied 6. La cloison 7 peut être réalisée en une matière plastique rigide, telle que du polypropylène.

Les moyens d'insonorisation comprennent en outre une coque 10 solidaire de l'une des faces de la cloison 7, de préférence celle située en avant du véhicule côté compartiment du groupe moto-propulseur de celui-ci, de manière à recouvrir complètement la cloison d'insonorisation 7 en définissant avec cette dernière un espace interne fermé étanche relativement à l'extérieur. De préférence, cet espace interne est rempli d'air.

La paroi frontale 11 de la coque d'insonorisation 10 s'étend de façon sensiblement parallèle à la cloison 7.

La coque d'insonorisation 10 est fixée à la face correspondante de la cloison d'insonorisation 7 par une bande plane de colle 12 interposée entre la face de la cloison 7 et le bord périphérique délimitant l'ouverture de la coque 10.

L'épaisseur de la paroi frontale 11 de la coque 10 et celle de la cloison 7 peuvent être identiques ou différentes.

La coque d'insonorisation 10 peut être également réalisée en une matière plastique rigide identique à celle de la cloison d'insonorisation 7.

En intégrant une coque à une cloison pour emprisonner de l'air entre elles, on procure à cet ensemble un effet de « double vitrage » permettant de réduire considérablement les bruits pouvant se propager dans l'habitacle du véhicule et, par conséquent, d'améliorer le confort au conducteur et au passager du véhicule.

## Revendications

1. Dispositif permettant d'atténuer les bruits se propageant entre une aile de véhicule, telle qu'une aile avant, et une structure porteuse de carrosserie (2) du véhicule, lorsque ce dernier se déplace ou est à l'arrêt, comprenant au moins une cloison d'insonorisation (7) disposée entre une paroi latérale externe (3) de l'aile et la structure porteuse de carrosserie (2), **caractérisé en ce que** la cloison d'insonorisation (7) est pourvue sur l'une de ses faces d'une coque d'insonorisation (10) solidaire de la cloison d'insonorisation (7) en recouvrant cette dernière de façon à définir un espace interne fermé et étanche.

2. Dispositif selon la revendication 1, **caractérisé en ce que,** dans le cas où l'aile (1) est une aile avant, l'ensemble à cloison (7) et coque (10) d'insonorisation est disposé transversalement au véhicule à l'extrémité arrière de la paroi latérale (3) de l'aile avant (1) pour obturer l'espace entre cette extrémité et le pied avant (6) de la structure porteuse de carrosserie (2) au niveau de l'entrée de porte.

3. Dispositif selon la revendication 1 ou 2,
**caractérisé en ce que** l'espace interne entre coque (10) et cloison (7) d'insonorisation est rempli d'air.

4. Dispositif selon l'une des revendications 1 ou 2, **caractérisé en ce que** la coque d'insonorisation (10) est fixée à la cloison d'insonorisation (7) par collage.

5. Dispositif selon l'une des revendications précédentes, **caractérisé en ce que** la paroi (11) de la coque d'insonorisation (10) recouvre complètement la cloison d'insonorisation (7) et s'étend de façon sensiblement parallèle à la cloison d'insonorisation (7).

6. Dispositif selon l'une des revendications précédentes, **caractérisé en ce que** la cloison d'insonorisation (7) comporte un joint souple périphérique (8) en matériau élastomère ou en matériau mousse et en appui étanche sur les faces internes correspondantes de la paroi latérale (3) de l'aile (1) et de la structure porteuse de carrosserie (2).

7. Dispositif selon l'une des revendications 2 à 6, **caractérisé en ce que** la coque d'insonorisation (10) est disposée en avant du véhicule.

8. Cloison d'insonorisation destinée à obturer l'espace entre une aile latérale avant (1) d'un véhicule et une structure porteuse de carrosserie (2) sur laquelle l'aile (1) doit être fixée, **caractérisée en ce qu'**elle est pourvue sur l'une de ses faces d'une coque d'insonorisation (10) solidaire de la cloison d'insonorisation (7) en recouvrant cette dernière de façon à définir un espace interne fermé et étanche.

9. Cloison selon la revendication 8, **caractérisée en ce que** l'espace interne entre coque (10) et cloison (7) d'insonorisation est rempli d'air.

10. Cloison selon la revendication 8 ou 9,
**caractérisée en ce que** la coque d'insonorisation (10) est fixée à la cloison d'insonorisation (7) par collage.

11. Cloison selon l'une des revendications 8 à 10, **caractérisée en ce que** la paroi (11) de la coque d'insonorisation (10) recouvre complètement la cloison d'insonorisation (7) et s'étend de façon sensiblement parallèle à la cloison d'insonorisation (7).

12. Cloison selon l'une des revendications 8 à 11, **caractérisée en ce que** la cloison d'insonorisation (7) comporte un joint souple périphérique (8) en matériau élastomère ou en matériau mousse.

13. Véhicule comprenant deux ailes avant (1),
**caractérisé en ce qu'**il comprend un dispositif permettant d'atténuer les bruits se propageant entre chaque aile avant du véhicule et une structure porteuse de carrosserie (2) du véhicule selon l'une quelconque des revendications 1 à 7.

## Claims

1. A device allowing the reduction of the noises propagating between a vehicle wing, such as a front wing, and a bodywork bearing structure (2) of the vehicle, when the latter is moving or is stopped, comprising at least one sound dampening partition (7) arranged between an external lateral wall (3) of the wing and the bodywork bearing structure (2),
**characterized in that** the sound dampening partition (7) is provided on one of its faces with a sound dampening shell (10) which is integral with the sound dampening partition (7), covering the latter so as to define a closed and sealed internal space.

2. The device according to Claim 1, **characterized in that,** in the case where the wing (1) is a front wing, the assembly of sound dampening partition (7) and shell (10) is arranged transversely to the vehicle at the rear end of the lateral wall (3) of the front wing (1) to close the space between this end and the front foot (6) of the bodywork bearing structure (2) at the level of the door entry.

3. The device according to Claim 1 or 2, **characterized in that** the internal space between sound dampening shell (10) and partition (7) is filled with air.

4. The device according to one of Claims 1 or 2,
**characterized in that** the sound dampening shell (10) is fixed to the sound dampening partition (7) by sticking.

5. The device according to one of the preceding claims, **characterized in that** the wall (11) of the sound dampening shell (10) completely covers the sound dampening partition (7) and extends in a substantially parallel manner to the sound dampening partition (7).

6. The device according to one of the preceding claims, **characterized in that** the sound dampening partition (7) comprises a peripheral flexible joint (8) of elastomer material or of foam material and in tight support on the corresponding internal faces of the lateral wall (3) of the wing (1) and of the bodywork bearing structure (2).

7. The device according to one of Claims 2 to 6,
**characterized in that** the sound dampening shell (10) is arranged at the front of the vehicle.

8. A sound dampening partition intended to close the space between a front lateral wing (1) of a vehicle and a bodywork bearing structure (2) on which the wing (1) is to be fixed, **characterized in that** it is provided on one of its faces with a sound dampening shell (10) which is integral with the sound dampening partition (7), covering the latter so as to define a closed and sealed internal space.

9. The partition according to Claim 8, **characterized in that** the internal space between shell (10) and sound dampening partition (7) is filled with air.

10. The partition according to Claim 8 or 9, **characterized in that** the sound dampening shell (10) is fixed to the sound dampening partition (7) by sticking.

11. The partition according to one of Claims 8 to 10, **characterized in that** the wall (11) of the sound dampening shell (10) completely covers the sound dampening partition (7) and extends in a substantially parallel manner to the sound dampening partition (7).

12. The partition according to one of Claims 8 to 11, **characterized in that** the sound dampening partition (7) comprises a flexible peripheral joint (8) of elastomer material or of foam material.

13. A vehicle comprising two front wings (1),
**characterized in that** it comprises a device allowing the reduction of the noises propagating between each front wing of the vehicle and a bodywork bearing structure (2) of the vehicle according to any one of Claims 1 to 7.

## Patentansprüche

1. Vorrichtung, die das Dämmen der Geräusche erlaubt, die sich zwischen einem Fahrzeugkotflügel, wie zum Beispiel einem vorderen Kotflügel, und einer Karosserietragstruktur (2) des Fahrzeugs ausbreiten, wenn dieses Letztere fährt oder stillsteht, darunter mindestens eine Schalldämmwand (7), die zwischen einer äußeren Seitenwand (3) des Kotflügels und der Karosserietragstruktur (2), angeordnet ist, **dadurch gekennzeichnet, dass** die Schalldämmwand (7) auf einer ihrer Seiten mit einer Schalldämmschale (10) versehen ist, die fest mit der Schalldämmwand (7) unter Abdecken dieser Letzteren derart fest verbunden ist, dass ein geschlossener und dichter Innenraum definiert wird.

2. Vorrichtung nach Anspruch 1, **dadurch gekennzeichnet, dass** in dem Fall, in dem der Kotflügel (1) ein vorderer Kotflügel ist, die Einheit aus Wand (7) und Schalldämmschale (10) quer zum Fahrzeug am hinteren Ende der Seitenwand (3) des vorderen Kotflügels (1) angeordnet ist, um den Raum zwischen diesem Ende und dem vorderen Fuß (6) der Karosserietragstruktur (2) auf dem Niveau des Türeingangs zu schließen.

3. Vorrichtung nach Anspruch 1 oder 2, **dadurch gekennzeichnet, dass** der Innenraum zwischen Schale (10) und Schalldämmwand (7) mit Luft gefüllt ist.

4. Vorrichtung nach einem der Ansprüche 1 oder 2, **dadurch gekennzeichnet, dass** die Schalldämmschale (10) an der Schalldämmwand (7) durch Kleben befestigt ist.

5. Vorrichtung nach einem der vorhergehenden Ansprüche, **dadurch gekennzeichnet, dass** die Wand (11) der Schalldämmschale (10) die Schalldämmwand (7) komplett abdeckt und sich im Wesentlichen parallel zu der Schalldämmwand (7) erstreckt.

6. Vorrichtung nach einem der vorhergehenden Ansprüche, **dadurch gekennzeichnet, dass** die Schalldämmwand (7) eine geschmeidige Umfangsdichtung (8) aus Elastomer- oder aus Schaumstoffmaterial aufweist, die dicht auf den entsprechenden Innenseiten der Seitenwand (3) des Kotflügels (1) und der Karosserietragstruktur (2) aufliegt.

7. Vorrichtung nach einem der Ansprüche 2 bis 6, **dadurch gekennzeichnet, dass** die Schalldämmschale (10) vorn am Fahrzeug angeordnet ist.

8. Schalldämmwand, die dazu bestimmt ist, den Raum zwischen einem vorderen seitlichen Kotflügel (1) eines Fahrzeugs und einer Karosserietragstruktur (2) zu verschließen, auf der der Kotflügel (1) befestigt werden soll, **dadurch gekennzeichnet, dass** sie auf einer ihrer Seiten mit einer Schalldämmschale (10) versehen ist, die fest mit der Schalldämmwand (7) verbunden ist, indem sie diese Letztere derart abdeckt, dass ein geschlossener und dichter Innenraum definiert wird.

9. Wand nach Anspruch 8, **dadurch gekennzeichnet, dass** der Innenraum zwischen Schale (10) und Schalldämmwand (7) mit Luft gefüllt ist.

10. Wand nach Anspruch 8 oder 9, **dadurch gekennzeichnet, dass** die Schalldämmschale (10) an der Schalldämmwand (7) durch Kleben befestigt ist.

11. Wand nach einem der Ansprüche 8 bis 10, **dadurch gekennzeichnet, dass** die Wand (11) der Schalldämmschale (10) die Schalldämmwand (7) komplett abdeckt und sich im Wesentlichen parallel zu der Schalldämmwand (7) erstreckt.

12. Wand nach einem der Ansprüche 8 bis 11, **dadurch gekennzeichnet, dass** die Schalldämmwand (7) eine geschmeidige Umfangsdichtung (8) aus Elastomer- oder aus Schaumstoffmaterial aufweist.

13. Fahrzeug, das zwei vordere Kotflügel (1) aufweist, **dadurch gekennzeichnet, dass** es eine Vorrichtung aufweist, die es erlaubt, die Geräusche zu dämmen, die sich zwischen jedem vorderen Kotflügel des Fahrzeugs und einer Karosserietragstruktur (2) des Fahrzeugs nach einem der Ansprüche 1 bis 7 ausbreiten.
